(19) Europäisches Patentamt

European Patent Office

Office européen des brevets

(11) **EP 0 731 003 A1**

(12) **EUROPÄISCHE PATENTANMELDUNG**

(43) Veröffentlichungstag:
**11.09.1996  Patentblatt 1996/37**

(51) Int. Cl.⁶: **B60R 21/00**

(21) Anmeldenummer: **96103147.3**

(22) Anmeldetag: **01.03.1996**

(84) Benannte Vertragsstaaten:
**DE ES FR GB IT SE**

(30) Priorität: **04.03.1995 DE 19507619**

(71) Anmelder: **TEMIC TELEFUNKEN microelectronic GmbH**
**74025 Heilbronn (DE)**

(72) Erfinder:
• **Fendt, Günther**
**86529 Schrobenhausen (DE)**

• **Hora, Peter**
**86529 Schrobenhausen (DE)**
• **Flocke, Heiner, Dr.**
**55294 Bodenheim (DE)**
• **Herz, Manfred**
**55230 Main-Laubenheim (DE)**
• **Spies, Hans**
**85276 Pfaffenhofen (DE)**

(74) Vertreter: **Maute, Hans-Jürgen, Dipl.-Ing.**
**TEMIC TELEFUNKEN microelectronic GmbH**
**Postfach 35 35**
**D-74025 Heilbronn (DE)**

(54) **Schaltung zur Steuerung und Zündung von Insassen-Schutzvorrichtungen**

(57)    Bei Schaltungen zur Zündung und Steuerung von Insassen-Schutzvorrichtungen wurde die Anzahl der Kondensatoren, die sowohl die für die Zündung der Insassen-Schutzvorrichtung benötigte Energie speichern, als auch zur kurzfristigen Aufrechterhaltung der noch notwendigen Funktionen nach Ausfall des Bord-netzes, dienen, reduziert. Dies wurde im wesentlichen dadurch erzielt, daß durch eine Stromregelungsschaltung die Kondensatorentladung kontrolliert erfolgt, d.h. der Stromfluß durch einen Abwärtswandler begrenzt wird.

FIG. 1

EP 0 731 003 A1

**Beschreibung**

In Kraftfahrzeugen befinden sich Auslösegeräte von Schutzeinrichtungen wie Gurtstraffer und Airbag-Systeme. Über einen Ein- oder Mehr-Kanal Beschleunigungsaufnehmer werden die, für eine Auslösung, relevanten Daten über einen oder mehreren Analog-Digitalwandler/n in einem oder mehreren Microprozessoren mit Speichereinrichtungen ausgewertet und gespeichert. Diese Informationen werden mit einer Zünd- und Interfaceansteuerung, auch untereinander, ausgetauscht und überprüft, um eine unnötige Auslösung der Sicherheitssysteme zu vermeiden oder im Bedarfsfall die einzelnen Sicherheitssysteme zum richtigen Zeitpunkt auszulösen. Die Auslösung einer Schutzeinrichtung erfolgt in der Regel durch Aktivieren einer Schutzeinrichtung - Zündpille als Primärzünder -, die sich bei Stromfluß erwärmt und somit eine Zündung hervorruft. Dieser Strom wird im Auslösefall von einem sich entladenden Kondensator verursacht.

Jede Zündstufe benötigte bisher immer einen Kondensator, da bei Einsatz eines gemeinsamen Kondensators der Zündstrom durch einen evtl. Nebenschluß unkontrolliert ansteigen würde und somit die richtige Auslösung der anderen Zündstufen nicht gewährleistet wäre, da evtl. die benötigte Energie nicht mehr zur Verfügung stehen könnte.

Außerdem weist jedes Auslösegerät einen zusätzlichen Autarkiekondensator auf. Dieser ist an das Netzteil gekoppelt. Die Aufgabe des Autarkiekondensators besteht darin, daß bei einem Bordnetzausfall die Elektronik noch für kurze Zeit betrieben werden kann, um im Notfall die korrekte Steuerung zur Auslösung der Schutzvorrichtung zu gewährleisten.

All die genannten Kondensatoren benötigen sehr viel Platz in der Baugruppe.

Die DE 24 54 424 C3 offenbart eine Schaltung für einen elektrischen Sensor, zur Auslösung einer Sicherheitsvorrichtung bei der, parallel zu einer Betriebsspannungsquelle, vier Kondensatoren geschaltet sind, die als Notspannungsquelle dienen.

Die DE 39 19 376 C2 offenbart eine Schaltung bei der eine elektronische Auslösevorrichtung nicht direkt aus der Zündleitung gespeist wird, sondern ihren Betriebsstrom aus einem ständig Ladung beziehenden Kondensator erhält.

Dieser kann dann bei einem Bordnetzausfall kurzzeitig die elektrische Auslösevorrichtung mit Strom versorgen.

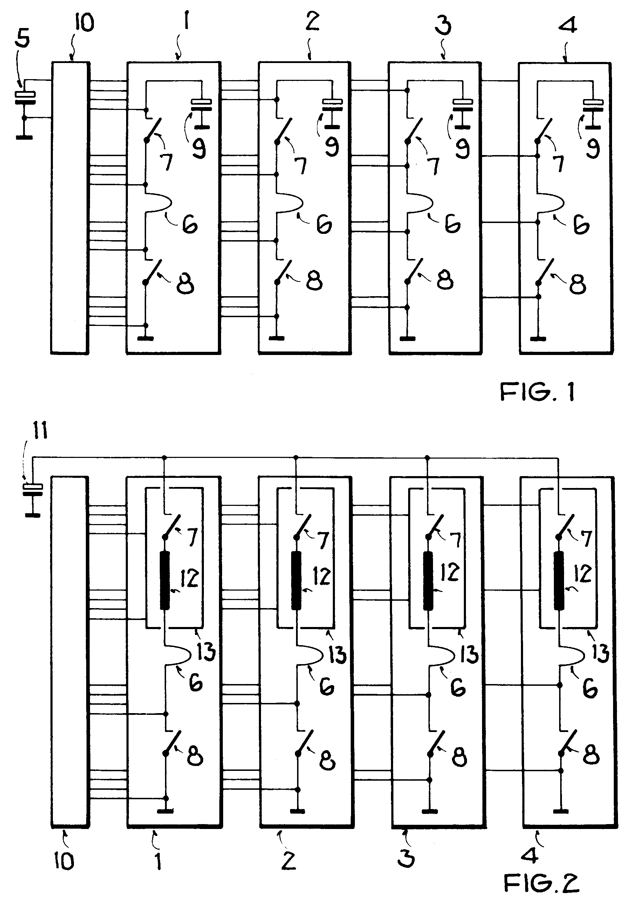

Figur 1 zeigt vier Zündendstufen (1, 2, 3, 4) und die Notversorgung durch einen Autarkiekondensator (5), der bei einem Bordnetzausfall die Elektronik, insbesondere Signalaufbereitung (10) noch für kurze Zeit mit Energie versorgen muß. Diese Abbildung entspricht dem momentanen Stand der Technik. In der Zündendstufe (1) erfolgt die Zündung der Zündpille (6). Nach dem Schließen des Leistungsschalters HIGH (7) und des Leistungsschalters LOW (8) entlädt sich der Zünd-Kondensator (9) und liefert den für die Zündpille (6) benötigten Zündstrom. Da im Zündfall die Zündpille einen Nebenschluß verursachen kann und der Zündstrom dadurch unkontrolliert ansteigen würde, ist eine Verwendung von einem einzigen gemeinsamen Kondensator für alle Zündendstufen nicht realisierbar.

Daher muß jede einzelne Zündendstufe auf die eben beschriebene Weise über jeweils einen Zünd-Kondensator (9) angesteuert werden. Bei der für den Platzbedarf relevanten Volumenbetrachtung kann von folgenden Werten ausgegangen werden:

Momentan werden z. B. für derartige Anordnungen Zünd-Kondensatoren mit folgenden Eigenschaften eingesetzt: $U = 25$ V, $C_z = 1000$ µF, $E_z = 200$ mJ.

Für Standardkondensatoren (keine Sondergröße, keine Sonderbauform) ergibt sich hieraus ein Volumen $V_z \approx 2,5$ cm$^3$.

Der für die Notversorgung benötigte Autarkiekondensator beansprucht bei folgenden Eigenschaften $U = 25$ V; $C_A = 2200$ µF; $E_A = 440$ mJ ein Volumen $V_A \approx 5$ cm$^3$.

Der gesamte Volumenbedarf aller genannten Kondensatoren ergibt sich dann aus $V_{Ges} = 4 \cdot V_z + V_A = 15$ cm$^3$. Der gesamte Energieinhalt beträgt:

$$E_{Ges} = 4 \cdot E_z + E_A = 1240 \text{ mJ.}$$

Nachteilig an diesen Verfahren ist aber, daß alle diese Schaltungen und Vorrichtungen mit mehreren Kondensatoren arbeiten müssen, die ihre Energie ohne Strombegrenzung also unkontrolliert an die entsprechenden Zünd- und Steuereinrichtungen abgeben. Das bedeutet aber, daß mehrere Zündendstufen, die z.B. für den Gurtstraffer-Fahrer, Gurtstraffer-Beifahrer, Airbag Fahrer und Airbag-Beifahrer benötigt werden, nicht aus einem Kondensator gespeist werden können. Dies hatte bisher auch die Folge, daß die Autarkieenergie bei Bordnetzausfall von einem separaten Kondensator abgeführt werden mußte. In diesen Auslösevorrichtungen wurden zuviele Kondensatoren benötigt, die diese Auslösegeräte unnötig vergrößern und beschweren.

Die Erfindung betrifft eine Schaltung zur Steuerung und Zündung von Insassen-Schutzvorrichtungen in einem Fahrzeug, das die oben genannten Nachteile vermeidet und mit dem sich die Anzahl der Kondensatoren ohne großen Aufwand reduziert, wobei alle bisherigen Eigenschaften erhalten bleiben. Diese Aufgabe wird erfindungsgemäß durch die Merkmale im Kennzeichen des Patentanspruchs 1 gelöst.

Vorteilhafte Weiterbildungen der Erfindung ergeben sich aus den abhängigen Ansprüchen.

Bei der vorgeschlagenen Schaltung zur Steuerung und Zündung von Insassen-Schutzvorrichtungen wird die Anzahl der Kondensatoren durch eine Stromregelung reduziert. Dies wird dadurch realisiert, daß alle, auch zeitlich versetzte, Zündvorgänge in den Zündendstufen über je eine Stromregelungsschaltung angesteuert werden.

Diese Stromregelungsschaltungen werden durch Abwärts-, Sperr- oder Durchflußwandler realisiert. Dieser regelt den gewünschten Stromfluß durch die Zündpille als Funktion vom momentanen Zündpillenwiderstand.

Alle Stromregelungsschaltungen können über den gleichen Kondensator gespeist werden. Dies hat zur Folge, daß nun nicht mehr die Anzahl der Kondensatoren abhängig ist von der Anzahl der Zündendstufen, sondern nur noch von der tatsächlich benötigten Energiemenge. Die Abwärtswandler können ohne größere Probleme in entsprechende Ansteuer-ICs integriert werden.

Die zusätzlich für jede Zündendstufe benötigte Spule des Abwärts-, Sperr- oder Durchflußwandlers besitzen wie im Ausführungsbeispiel beschrieben nur sehr kleine Induktivitäten, so daß der hierfür benötigte Platz keine wesentliche Rolle spielt.

Die mit der Erfindung erzielten Vorteile bestehen insbesondere darin, daß die Anzahl der Kondensatoren reduziert und somit auch eine Verkleinerung und Gewichtsreduzierung der kompletten Baugruppe erzielt wird.

Anhand der in der Fig. 2 beschriebenen Schaltungsanordnung wird dargestellt wie die Anzahl der Kondensatoren, unter Beibehaltung aller Funktionen, verringert werden kann.

Figur 2 zeigt eine Version bei der, mit einer minimalen Anzahl von Kondensatoren, platzsparend alle Funktionen weiterhin beibehalten werden können.

In der Zündstufe (1) erfolgt die Zündung der Zündpille (6) nach dem Schließen des Leistungsschalters HIGH (7) und des Leistungsschalters LOW (8) mit einer Stromregelungsschaltung (13), die eine kontrollierte Energieabgabe aus dem kombinierten Zünd- und Autarkiekondensator (11) bewirkt. Die Zündpille wird nur mit dem zur Zündung benötigten Strom versorgt.

Der Zündstrom kann bei einem Nebenschluß durch die Stromregelungsschaltung (13) nicht mehr unkontrolliert ansteigen. Der Kondensator wird nicht vollständig entladen! Diese Stromregelungsschaltung wird durch einen Abwärts-, Sperr- oder Durchflußwandler mit einer entsprechenden Spule (12) realisiert. Die Induktivität der Spule ist abhängig von der Taktfrequenz des Abwärts-, Sperr- oder Durchflußwandlers und kann von der Größenordnung her mit $L \approx 1 \ \mu H$ berechnet werden.

Bei der für den Platzbedarf relevanten Volumenbetrachtung kann für einen Standardkondensator von folgenden Werten ausgegangen werden:

U = 63 V (zum einen können durch neue Prozesse z.B. BCD 60/2 derartige Nennspannungen realisiert werden, das hat den Vorteil, daß die Energiespeicherfähigkeit mit $E = 1/2 \ C \cdot U^2$ zunimmt, zum anderen muß die Eingangsspannung für den Abwärts-, Sperr- oder Durchflußwandler höher sein als die momentan benötigte Ausgangsspannung von U = 20 V), C = 2200 μF (Standardgröße), daraus ergibt sich eine Energiemenge von E = 2750 mJ (mit dieser Energie könnten sogar weitere Endstufen angesteuert werden). Für diesen Standardkondensator ergibt sich ein Volumen von 10 cm³. Die Abmessungen der Spulen mit einer Induktivität von ca. 1 μH sind vernachlässigbar klein und könnten ggf. auch als Schleife in Verbindung mit einem Ferrit direkt auf der Platine realisiert werden. Die Abwärtswandler mit Ausnahme der Spule können in der Ansteuerung (10) mit integriert werden, so daß kein weiterer Platz auf der Platine hierfür benötigt wird.

## Patentansprüche

1. Schaltung zur Steuerung und Zündung von Insassenschutzvorrichtungen gekennzeichnet dadurch, daß die Zündenergien für mehrere Zündendstufen aus einem Kondensator über je eine Stromregelungsschaltung, je Zündkreis, in Form eines Abwärts-, Sperr- oder Durchflußwandlers entnommen wird.

2. Schaltung nach Anspruch 1, dadurch gekennzeichnet, daß zusätzlich der Energiebedarf für die Notstromversorgung des Ansteuergerätes aus dem gleichen Kondensator, der auch die Zündenergien liefert, entnommen wird.

3. Schaltung nach Anspruch 1, dadurch gekennzeichnet, daß die Spule des Abwärts-, Sperr- oder Durchflußwandlers auch durch eine entsprechende Leiterbahnführung auf der Platine in Verbindung mit einer Ferrit-Bestückung realisiert werden kann.

FIG. 1

FIG.2

Europäisches
Patentamt

# EUROPÄISCHER RECHERCHENBERICHT

Nummer der Anmeldung

EP 96 10 3147

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | WO-A-90 02674 (BOSCH GMBH ROBERT) 22.März 1990 | 1,2 | B60R21/00 |
| Y | * das ganze Dokument * | 3 | |
| | --- | | |
| X | WO-A-89 04779 (BOSCH GMBH ROBERT) 1.Juni 1989<br>* Seite 3, Zeile 24 - Zeile 29 *<br>* Seite 4, Zeile 12 - Zeile 18; Abbildung 2 * | 1,2 | |
| | --- | | |
| X | EP-A-0 615 886 (DELCO ELECTRONICS CORP) 21.September 1994<br>* Spalte 7, Zeile 24 - Spalte 9, Zeile 40; Abbildung 6 * | 1,2 | |
| | --- | | |
| Y | US-A-5 343 394 (TAKEUCHI KUNIHIRO ET AL) 30.August 1994<br>* Spalte 4, Zeile 20 - Spalte 5, Zeile 25; Abbildung 3 * | 3 | |
| | --- | | RECHERCHIERTE SACHGEBIETE (Int.Cl.6) |
| A | DE-A-40 12 386 (BOSCH GMBH ROBERT) 24.Oktober 1991<br>* Zusammenfassung * | 3 | B60R |
| | --- | | |
| A | WO-A-90 02440 (BOSCH GMBH ROBERT) 8.März 1990<br>* Zusammenfassung * | 3 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 30.Mai 1996 | Waldorff, U |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...................................................................
& : Mitglied der gleichen Patentfamilie, übereinstimmendes Dokument

EPO FORM 1503 03.82 (P04C03)